# EUROPÄISCHE PATENTSCHRIFT

(11) **EP 1 262 680 B1**
(45) Veröffentlichungstag und Bekanntmachung des Hinweises auf die Patenterteilung: **26.09.2007**
(21) Anmeldenummer: 01113349.3
(22) Anmeldetag: 01.06.2001
(51) Int. Cl.: F16D 69/02

(54) **Verfahren zum Herstellen einer Bremsbacke für Scheibenbremsen**
Process for manufacturing a brake pad
Procédé de fabrication d'un patin de frein

(43) Veröffentlichungstag der Anmeldung: 04.12.2002
(73) Patentinhaber: TMD Friction GmbH, 51381 Leverkusen (DE)
(72) Erfinder: Tiebel, Dieter, 51375 Leverkusen (DE); Komor, Henryk, 51375 Leverkusen (DE)
(74) Vertreter: Müller, Eckhard

(56) Entgegenhaltungen:
- WO-A-97/19277
- DE-A- 3 516 759
- DE-A- 4 321 713
- US-A- 6 005 717

## Beschreibung

Die Erfindung bezieht sich auf ein Verfahren für die Herstellung von Reibbelägen für Scheibenbremsbeläge für Personen- und Lastkraftwagen und Schienenfahrzeuge usw.

Aus der EP 0861 386 ist ein Verfahren zur Herstellung von Reibbelägen bekannt , bei dem in einem Mischer Reibmasse in Form eines Granulatmateriales hergestellt wird, dieses Granulatmaterial mit einem Belagträger in einer Pressform zu Reibbelägen verpresst wird, die fertigen Reibbeläge nach dem Pressen einem Härteprozess in einem Ofen ausgesetzt werden, die ausgehärteten Beläge nach eventuellen Schleifprozessen in einer Scorch-Pressstation unter Druck und Temperatur verkokt werden.
Die Anlagen sind verkettet und gewährleisten einen ununterbrochenen Arbeitsfluss.

Nachteilig an diesem Verfahren ist, dass die Scorch-Einheit zum Verkoken, d.h. Zersetzen der organischen Bestandteile an der Reibmaterialoberfläche, relativ viel Energie aufwendet , um die Oberfläche über die Druckplatten entsprechend zu erhitzen. Die Wirktemperatur an der Oberfläche beträgt in der Regel 500 bis 700°C. Während des Prozesses muss die der zu behandelnden Reibbelagoberfläche gegenüberliegende Trägerplatte gekühlt werden, um nicht in den Materialeigenschaften negativ beeinflusst zu werden.

Um nachfolgende Bearbeitungsschritte zu ermöglichen, muss der Belag auf 30 bis 40°C abgekühlt werden, was wiederum Energie benötigt.

Die gleichzeitige Aufbringung von Druck und Temperatur soll eine möglichst gute Wärmedurchdringung und Wirktiefe im Reibbelagmaterial ermöglichen, jedoch mit hohem Energieaufwand.

Die Erfahrung mit solchen Anlagen hat gezeigt , dass durch den direkten Kontakt der Druckelemente diese durch die flüchtigen Stoffe bei kontinuierlicher Fertigung stark verschmutzt werden, so dass in regelmäßigen Abständen Reinigungen erfolgen müssen, die eine gesamte verkettete Anlage in ihrem Fertigungsprozess behindert bzw. während dieser Zeit ausfallen lässt.

Aus der DE 35 16 759 A ist ein Verfahren zur Wärmebehandlung der Reibfläche eines Reibbelages bekannt, bei dem nach Fertigstellung eines Reibbelages nachträglich die Reibbelagoberfläche mit einem Laser behandelt wird, um auf der Reibbelagoberfläche ein Streifenmuster zu erzeugen. Hierzu werden CO₂-Laser mit mehreren Laserköpfen verwendet.

Aus der U.S. 6,005,717 ist ein Kombinationssystem für mehrere Diodenlaser beschrieben, bei dem mehrere Laserlichtstrahlen kombiniert werden können, um einen rechteckigen Laserspot hoher Energie zu erzeugen.

Der Erfindung liegt die Aufgabe zugrunde ein Verfahren zur Herstellung von Reibbelägen zur Verfügung zu stellen, das bei geringem Energieaufwand und berührungslos eine kontinuierliche Prozesslinie ermöglicht. Die Wirtschaftlichkeit solcher Anlagen lässt sich damit entscheidend erhöhen.

Diese Aufgabe wird erfindungsgemäß durch ein Verfahren zur Herstellung von Reibbelägen nach den Merkmalen des Anspruchs 1 gelöst.

Die mit der Erfindung erzielten Vorteile bestehen insbesondere darin, dass ein solches Herstellverfahren, wobei der Reibbelag mittels eines Hochleistungsdiodenlasers gescorcht wird, berührungslos stattfindet und so jedwede Verschmutzungen, die den Prozess stören vermieden werden und dass in Bezug auf andere Verfahren wenig Energie zur Wärmeeinleitung benötigt wird. Des weiteren wird durch den reduzierten aber gezielten Energiefluss nur die der Trägerplatte abgewandten Reibmaterialoberfläche erwärmt. Eine negative Beeinflussung des Trägerplattenmaterials erfolgt nicht.

Da nur das Reibmaterial konzentriert und kurzzeitig der Temperatur ausgesetzt wird, findet auch keine Grunderwärmung des gesamten Reibbelages statt, so dass dieser ohne Abkühlprozess sofort weiter behandelt werden kann, entweder von Hand oder direkt im nachfolgenden Bearbeitungsprozess.

Eine bevorzugte Verfahrensweise sieht vor, dass die Arbeitsschritte nach dem Aushärtungsprozess verkettet angeordnet sind und die Beläge automatisch mittels kontinuierlicher Fördermittel von Arbeitsstation zu Arbeitsstation transportiert werden.

Vorteilhaft können die Nuten und Schrägen vor oder nach dem Verkokungs- bzw. Scorchprozess eingeschliffen werden.

Vorteilhaft arbeitet der Hochleistungsdiodenlaser mit einer Leistungsdichte von 50 bis 150 W/cm², vorzugsweise wischen 80 und 120 W/cm², und wirkt in einer Fläche über die gesamte Breite der Reibmaterialoberfläche, wobei die Einwirkzeit des Lasers auf das Reibmaterial, d.h. die Zeit, die ein Reibmaterialbereich der Laserenergie ausgesetzt ist, 3 bis 15 s beträgt.

Dadurch wird der Energieeintrag gering gehalten und damit die Gesamterwärmung des Reibbelages und die Flammentwicklung nahezu vermieden, denn bei großer Hitze neigen die flüchtigen Stoffe zur Entzündung.

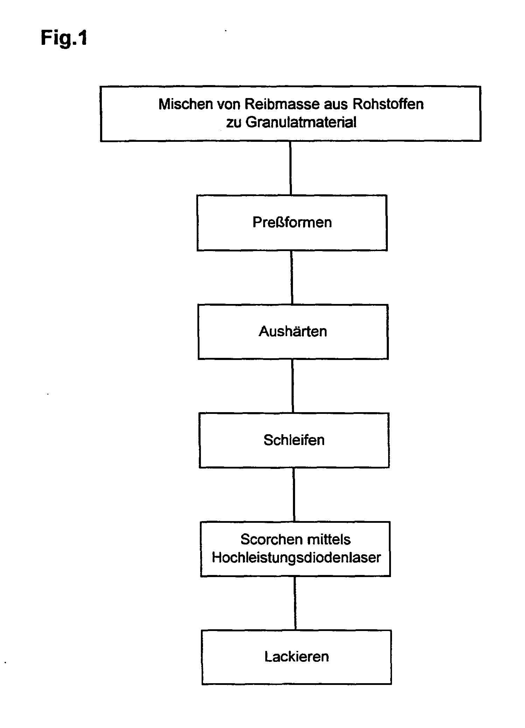

In Figur 1 ist ein Verfahren zur Herstellung eines Reibbelages schematisch dargestellt.

Die Reibmaterialmischung bestehend aus organischen und/oder anorganischen Füllstoffen, organischen und/oder anorganischen Elastomeren, Faserstoffen, Schmierstoffen, organischen Bindemitteln, und gegebenenfalls Metallen und/oder Metallverbindungen wird in Lödige- oder Eirich-Mischem zu einem Granulat gemischt, das anschließend in einem Preßvorgang in einer Preßform auf eine Trägerplatte unter Druck und Temperatur verpreßt wird. Die Preßtemperaturen reichen nicht aus die organischen Bindemittel ganz zu zersetzen.

Zwischen Trägerplatte und Reibmaterial kann eine Zwischenschicht als Bindemittel oder als Dämpfungsschicht angeordnet sein.

Nach dem Preßformen wird der Reibbelag in einem Ofen ausgehärtet. Die kann eingespannt erfolgen, d.h. wieder unter Druckaufbringung oder uneingespannt um die notwendigen elastischen Eigenschaften eines Reibbelages einzustellen.

Nach dem Aushärtungsprozeß erfolgt die Schleifbehandlung, wobei der Belag auf das gewünschte Dickenmaß geschliffen wird und ggf. auch notwendige Nuten oder Schrägen angeschliffen werden.

Anschließend erfolgt die Scorchbehandlung mittels eine Hochleistungsdiodenlasers.

Ab dem Härteprozeß kann der Prozeß in verketteter Form stattfinden. Die Härteöfen sind üblicherweise Einzelöfen , die von Hand beschickt werden. Zum eingespannten Härten werden die Reibbeläge von Hand in Spannrahmen eingespannt und nach dem Härten wieder ausgespannt.

Über Transportbänder gelangt der Reibbelag aus der Schleifanlage in die Scorcheinheit, die der Belag in 3 bis 20 Sekunden durchfährt. Der Energieeintrag ist relativ kurz, so daß nur die gewünschte Randzone des Reibbelages kurzzeitig auf hohe Temperaturen erhitzt wird. Die dabei entstehenden flüchtigen Stoffe werden abgesaugt.

Ohne Unterbrechung oder Abkühlung kann der Reibbelag sofort weiterbearbeitet werden.

Das weitere Handling kann von Hand stattfinden.

In der Regel findet anschließend ein Reinigungsprozeß der Trägerplattenoberfläche mittels Sandstrahlen statt, damit diese anschließend sauber lackiert werden kann.

## Patentansprüche

1. Verfahren zur Herstellung von Reibbelägen , bei dem
- in einem Mischprozess Reibmaterial in Form von Granulatmaterial oder Pulver hergestellt wird,
- das Reibmaterial mit oder ohne Zwischenschicht auf einer Trägerplatte in einem Pressprozess in einer Pressform zu Reibbelägen verpresst wird,
- die fertiggepressten Reibbeläge anschließend in einem Ofen eingespannt oder einspannungsfrei in einem vorgegebenen Zeitraum ausgehärtet werden,
- die Reibbeläge in einem Schleifprozess auf Stärkenmaß geschliffen werden, und
- im Anschluss die zum Bremsvorgang bestimmte Reibbelagoberfläche bis zu einer bestimmten Tiefe verkokt wird,
**dadurch gekennzeichnet,**
**dass** zum berührungsfreien Verkoken der Reibbelagoberfläche ein Hochleistungsdiodenlaser verwendet wird, wobei die der Trägerplatte abgewandte Reibbelagoberfläche voliflächig von dem Energiestrahl des Hochleistungsdiodenlasers in einem Durchlauf verkokt wird.

2. Verfahren nach Anspruch 1, **dadurch gekennzeichnet, dass** der Hochleistungsdiodenlaser die Reibmaterialoberfläche mit einer Leistungsdichte von 50 bis 150 W/cm² verkokt.

3. Verfahren nach Anspruch 1 oder 2 **dadurch gekennzeichnet, dass** die Einwirkzeit des Energiestrahls des Hochleistungslasers auf das Reibmaterial 3 bis 15 Sekunden beträgt.

4. Verfahren nach einem der Ansprüche 1 bis 3, **dadurch gekennzeichnet, dass** die Arbeitsschritte nach dem Aushärtungsprozess verkettet angeordnet sind und die Beläge automatisch mittels kontinuierlicher Fördermittel von Arbeitsstation zu Arbeitsstation transportiert werden.

5. Verfahren nach einem der Ansprüche 1 bis 4, **dadurch gekennzeichnet, dass** das Reibmaterial aus variablen Anteilen aus organischen und/oder anorganischen Füllstoffen, organischen und/oder anorganischen Elastomeren, Faserstoffen, Schmierstoffen, organischen Bindemitteln und gegebenenfalls Metallen und/oder Metallverbindungen zusammensetzt wird.

6. Verfahren nach einem der Ansprüche 1 bis 5 **dadurch gekennzeichnet, dass** vor dem Verkokungsprozess Nuten und/oder Schrägen in die Reibbeläge eingeschliffen werden.

7. Verfahren nach einem der Ansprüche 1 bis 5 **dadurch gekennzeichnet, dass** nach dem Verkokungsprozess Nuten und/oder Schrägen in die Reibbeläge eingeschliffen werden.

8. Verfahren nach Anspruch 1 bis 7, **dadurch gekennzeichnet, dass** die Reibbeläge nach dem Verkokungsprozess mit Lack beschichtet werden,

9. Verfahren nach einem der Ansprüche 1 bis 8 **dadurch gekennzeichnet, dass** die der Trägerplatte abgewandte Reibmaterialoberfläche mit einem flächigen Energiestrahl bearbeitet wird.

10. Verfahren nach Anspruch 9, **dadurch gekennzeichnet, dass** der flächige Energiestrahl die gesamte Breite des Reibbelages erfasst.

## Claims

1. Method of producing friction linings, in which
- friction material in the form of granulate material or powder is produced in a mixing process,
- the friction material is press-moulded together with or without an intermediate layer on a carrier plate in a press-moulding process in a press mould to form friction linings,
- the friction linings press-moulded to finished state are subsequently cured for a predetermined period of time in an oven with clamping in place or without clamping in place,
- the friction linings are ground in a grinding process to thickness dimension and
- the friction lining surface intended for the braking process is subsequently carbonised to a predetermined depth,
**characterised in that** a high-performance diode laser is used for contact-free carbonisation of the friction lining surface, wherein the friction lining surface remote from the carrier plate is carbonised over the whole area by the energy beam of the high-performance diode laser in one pass.

2. Method according to claim 1, **characterised in that** the high-performance diode laser carbonises the friction material surface with a power density of 50 to 150 W/cm².

3. Method according to claim 1 or 2, **characterised in that** the action time of the energy beam of the high-performance laser on the friction material is 3 to 15 seconds.

4. Method according to one of claims 1 to 3, **characterised in that** the working steps after the curing process are interlinked and the linings are automatically transported by way of continuous conveying means from work station to work station.

5. Method according to one of claims 1 to 4, **characterised in that** the friction material is composed of variable proportions of organic and/or inorganic fillers, organic and/or inorganic elastomers, fibrous materials, lubricants, organic binders and optionally metals and/or metal compounds.

6. Method according to one of claims 1 to 5, **characterised in that** grooves and/or chamfers are ground into the friction linings prior to the carbonisation process.

7. Method according to one of claims 1 to 5, **characterised in that** grooves and/or chamfers are ground into the friction linings after the carbonisation process.

8. Method according to claim 1 to 7, **characterised in that** the friction linings are coated with paint after the carbonisation process.

9. Method according to one of claims 1 to 8, **characterised in that** the friction material surface remote from the carrier plate is processed by an areal energy beam.

10. Method according to claim 9, **characterised in that** the areal energy beam scans the entire width of the friction lining.

## Revendications

1. Procédé de fabrication de garnitures de friction, dans lequel
- au cours d'un processus de mélange, un matériau de friction sous forme de granulés ou de poudre est fabriqué,
- le matériau de friction est pressé avec ou sans couche intermédiaire sur une plaque de support au cours d'un processus de compression dans un moule de presse pour obtenir des garnitures de friction,
- les garnitures de friction entièrement pressées sont ensuite durcies dans un four avec ou sans serrage pendant un laps de temps prédéterminé,
- les garnitures de friction sont fortement polies au cours d'un processus de polissage, et
- enfin, la surface de la garniture de frein définie pour le processus de freinage est cuite jusqu'à une profondeur définie,
**caractérisé en ce que**
pour cuire sans contact la surface de la garniture de friction, un laser à diode haute puissance est utilisé, la surface de la garniture de friction opposée à la plaque de support étant entièrement cuite par le faisceau énergétique du laser à diode haute puissance en un passage.

2. Procédé selon la revendication 1, **caractérisé en ce que** le laser à diode haute puissance cuit la surface du matériau de friction avec une densité de puissance allant de 50 à 150 W/cm².

3. Procédé selon la revendication 1 ou 2, **caractérisé en ce que** la durée d'action du faisceau énergétique du laser haute puissance sur le matériau de friction a une valeur de 3 à 15 secondes.

4. Procédé selon l'une quelconque des revendications 1 à 3, **caractérisé en ce que** les étapes de travail après le processus de durcissement sont disposées en chaîne et les garnitures sont transportées automatiquement par des moyens de transport continus d'un poste de travail à un autre.

5. Procédé selon l'une quelconque des revendications 1 à 4, **caractérisé en ce que** le matériau de friction est composé de proportions variables de charges organiques et/ou inorganiques, d'élastomères organiques et/ou inorganiques, de matières fibreuses, de lubrifiants, de liants organiques et éventuellement de métaux et/ou de liaisons métalliques.

6. Procédé selon l'une quelconque des revendications 1 à 5, **caractérisé en ce qu'**avant le processus de carbonisation, des rainures et/ou des chanfreins sont formés dans les garnitures de friction.

7. Procédé selon l'une quelconque des revendications 1 à 5, **caractérisé en ce qu'**après le processus de cuisson, des rainures et/ou des chanfreins sont formés dans les garnitures de friction.

8. Procédé selon l'une quelconque des revendications 1 à 7, **caractérisé en ce que** les garnitures de friction sont revêtues de vernis après le processus de cuisson.

9. Procédé selon l'une quelconque des revendications 1 à 8, **caractérisé en ce que** la surface du matériau de friction opposée à la plaque de support est traitée avec un faisceau énergétique de grande étendue.

10. Procédé selon la revendication 9, **caractérisé en ce que** le faisceau énergétique de grande étendue couvre toute la largeur de la garniture de friction.
